# EUROPÄISCHE PATENTSCHRIFT

(11) **EP 4 107 501 B1**
(45) Veröffentlichungstag und Bekanntmachung des Hinweises auf die Patenterteilung: **10.01.2024**
(21) Anmeldenummer: 21702466.0
(22) Anmeldetag: 28.01.2021
(51) Int. Cl.: F16D 66/00, G01P 3/489, G01K 13/08, B60T 17/22, G01D 5/12, G01P 3/44

(54) **VORRICHTUNG ZUR TEMPERATURBESTIMMUNG**
DEVICE FOR TEMPERATURE DETERMINATION
DISPOSITIF DE DÉTERMINATION DE LA TEMPÉRATURE

(30) Priorität: 18.02.2020 DE 102020104194
(43) Veröffentlichungstag der Anmeldung: 28.12.2022
(73) Patentinhaber: KNORR-BREMSE Systeme für Nutzfahrzeuge GmbH, 80809 München (DE)
(72) Erfinder: KLUFTINGER, Andre, 63924 Kleinheubach (DE); WINDISCH, Andreas, 82008 Unterhaching (DE); THIERFELDER, Felix, 85715 Unterschleißheim (DE)
(86) Internationale Anmeldenummer: PCT/EP2021/051975
(87) Internationale Veröffentlichungsnummer: WO 2021/165009

(56) Entgegenhaltungen:
- EP-A1- 1 211 500
- WO-A1-2004/027433

## Beschreibung

Die vorliegende Erfindung bezieht sich auf eine Vorrichtung und ein Verfahren zur Bestimmung einer Temperatur über eine Pulsbreite in einer Datenübertragung eines Sensors, und insbesondere auf eine Temperatursensierung bei einem aktiven Drehzahlsensor.

Die Übertragung von Daten aus einem Sensor erfolgt typischerweise durch eine Abfolge zeitlich begrenzter elektrischer Pulse nach einem festgelegten Datenübertragungsprotokoll. Beispielsweise kommt bei aktiven Drehzahlsensoren in PKW und Nutzfahrzeugen ein Protokoll zum Einsatz, welches unter der Autorenschaft des Verbands der Automobilindustrie VDA und der Daimler AG als Empfehlung des VDA unter dem Titel "Requirement Specifications for Standardized Interface for Wheel Speed Sensors with Additional Information - AK-Protocol Version: 4.0" am 13.02.2008 veröffentlicht worden ist. Das Protokoll übermittelt Sensordaten mit Hilfe einer Manchester-Codierung durch zwei Stromstärken, wobei Informationen über Geschwindigkeit, Drehrichtung, Luftspalt und Sensorkondition ausgegeben werden. Das AK-Protokoll sieht insbesondere keine Übertragung einer Information zur Temperatur im Sensor vor - auch dann nicht, wenn der Sensor selbst beispielsweise durch einen eigenen internen Sensor eine solche Temperatur erfasst. Dies schließt die Übertragung einer Temperaturinformation aus dem Drehzahlsensor ohne eine Verwendung weiterer Hardware oder eine Abkehr oder Abwandlung des gegebenen Standards aus.

In Fällen wie dem vorangehend beschriebenen besteht jedoch ein Bedarf nach einem Messwert einer Temperatur aus dem Drehzahlsensor und/oder aus dessen Umgebung. So können etwa Steuereinrichtungen im Bereich von Bremssystemen oder allgemeiner Teile der Fahrzeugelektronik eine Indikation der Temperatur im Lager an einer Nutzfahrzeugachse oder an einem Anhänger benötigen. Dabei können beispielsweise eine möglichst genaue Angabe einer Temperatur im Drehzahlsensor oder in dessen Umgebung, oder auch eine Warnung bei zu hoher Temperatur erwünscht sein. Aufgrund technischer Rahmenbedingungen oder aus Kosten- oder Effizienzgründen sollen jedoch weitere Sensoren oder Bauteile zu einer direkten Temperaturmessung ebenso wie eine Abkehr von etablierten Datenübertragungsprotokollen vermieden werden. Die für die Erfindung relevanten Dokumente des Standes der Technik sind die Patentschriften WO 2004/027433 A1 und EP 1 211 500 A1.

Zumindest ein Teil der genannten Probleme wird durch eine Vorrichtung nach Anspruch 1, ein Sensorsystem nach Anspruch 4, ein Fahrzeug nach Anspruch 6, ein Verfahren nach Anspruch 8, ein Verfahren nach Anspruch 9 und ein Computerprogrammprodukt nach Anspruch 11 gelöst. Die abhängigen Ansprüche definieren weitere vorteilhafte Ausführungsformen der Gegenstände der unabhängigen Ansprüche.

Die vorliegende Erfindung bezieht sich auf eine Vorrichtung für eine Bestimmung einer Temperaturinformation aus einem Sensorgerät, welches einen Drehzalsensor umfasst und zu einer Übertragung von Sensorinformation durch zeitlich begrenzte elektrische Pulse nach einem festgelegten Protokoll ausgebildet ist. Die Vorrichtung ist gekennzeichnet durch eine Datenverarbeitungseinheit, die ausgebildet ist, um eine Pulsdauer der elektrischen Pulse an mindestens einem der elektrischen Pulse zu messen. Eine solche Pulsdauer kann insbesondere durch das Protokoll definiert sein. Die Datenverarbeitungseinheit ist zudem ausgebildet, um Referenzdaten zu einem Zusammenhang zwischen der Pulsdauer und Wärmeeffekten im Sensorgerät abzurufen, und um die Temperaturinformation basierend auf zumindest einem Ergebnis der Messung sowie den Referenzdaten zu bestimmen.

Die Temperaturinformation kann dabei beispielsweise ein Wert, aber auch etwa eine Veränderung oder Steigerungsrate einer Temperatur oder eines Temperaturbereichs im Inneren oder in der Nähe des Sensorgeräts sein. Das Sensorgerät umfasst notwendigerweise mindestens einen Sensor, welcher detektierte Daten als Sensorinformation ausgibt, sowie ein Gerät oder Modul zur Übersetzung der ausgegebenen Sensorinformation in das Protokoll der Übertragung. Die Übertragung erfolgt durch eine geeignete elektrische Verbindung, beispielsweise einer Stromleitung. Das Protokoll kann insbesondere das bereits angesprochene AK-Protokoll sein, aber beispielsweise auch ein Übertragungsschema, das die Sensorinformation selbst durch eine Pulsbreite codiert. Ausführungsbeispiele sehen insbesondere vor, dass die übertragene Sensorinformation die Temperaturinformation selbst nicht enthält. Diese Einschränkung ist jedoch für eine vorteilhafte Anwendung nicht notwendig. Vielmehr kann die Temperaturinformation beispielsweise sowohl in der Vorrichtung durch die Datenverarbeitungseinheit bestimmt als auch in der Sensorinformation enthalten sein und somit redundant vorliegen. So kann die Vorrichtung die Temperaturinformation etwa zum Zweck einer Überwachung einer Funktionstüchtigkeit des Sensors verwendet werden.

Ein messbarer und reproduzierbarer Zusammenhang zwischen der Pulsdauer der elektrischen Pulse und Wärmeeffekten in solchen Sensorgeräten ist beobachtet worden. Dieser Zusammenhang kann kollektiv durch im Einzelnen nicht näher bestimmte Abhängigkeiten der Funktionsweise von im Sensorgerät vorhandenen elektrischen Schaltkreiskomponenten oder Halbleiterbauelementen zustandekommen; insbesondere zeigen PN-Übergänge in Dioden, Transistoren oder Oszillatoren jeweils eine Temperaturdrift. Diese Temperaturdrift, bzw. der sich darüber aus einer Vielzahl von Komponenten ergebende Effekt auf die Pulsbreite, wird durch die Vorrichtung genutzt, um Rückschlüsse auf die Temperatur im Sensor zu erhalten.

Die Vorrichtung kann neben der Datenverarbeitungseinheit weitere Komponenten oder Verbindungselemente umfassen. In Ausführungsbeispielen ist die Datenverarbeitungseinheit beispielsweise in eine Steuereinrichtung eines Bremssystems für ein Fahrzeug integriert.

Die Ausbildung der Vorrichtung zur Abrufung von Referenzdaten ist breit auszulegen. So können Referenzdaten beispielsweise in Form von Listen, Tabellen (oder aus dem Englischen auch look-up table), Kennlinien oder Funktionen in einer Speichereinheit der Vorrichtung hinterlegt sein. Unabhängig davon kann das Abrufen von Referenzdaten aber etwa auch ein Übertragen einer Vergleichstemperatur, eine Messung und/oder eine Abspeicherung einer solchen umfassen. Beispielsweise kann die Vorrichtung Zugriff auf eine oder mehrere Werte von Steigungen für einen zumindest abschnittsweise linearen Zusammenhang zwischen einer Temperatur im oder am Sensorgerät und der Pulsbreite besitzen, welche abgespeichert vorliegen, einen Referenzpunkt für die Bestimmung der Temperatur beispielsweise durch eine Messung der Pulsbreite zu vordefinierten Zeitpunkten gewinnen und abspeichern, um dann aus zwischen den vordefinierten Zeitpunkten gemessenen Pulsbreiten anhand dieser gespeicherten Referenzdaten eine Temperatur zu errechnen.

Optional weisen die Referenzdaten zumindest eines der folgenden Merkmale auf:
- die Referenzdaten spezifizieren für mindestens eine Pulsdauer der elektrischen Pulse eine der Pulsdauer zugeordnete Temperatur,
- die Referenzdaten spezifizieren einen linearen Zusammenhang zwischen einer Temperatur und der Pulsdauer der elektrischen Pulse (zum Beispiel über einen Steigungswert),
- die Referenzdaten spezifizieren einen quantisierten (z.B. abschnittsweisen) oder nicht-linearen Zusammenhang zwischen einer Temperatur und der Pulsdauer der elektrischen Pulse,
- die Referenzdaten spezifizieren sensorabhängige Korrekturdaten, welche Abweichungen des Sensorgeräts von einem vordefinierten Zusammenhang zwischen einer Temperatur und der Pulsdauer der elektrischen Pulse festlegen.

Die Referenzdaten können dabei insbesondere in Form einer Liste oder Tabelle aus Pulsbreitenwerten und dazu korrelierten Temperatur- oder Korrekturwerten bestehen, unabhängig davon oder in Kombination damit aber beispielsweise auch auf abstrakte Weise eine Kennlinie für eine Temperatur festlegen, so zum Beispiel wie bereits erwähnt in Form eines Steigungswerts oder einer Veränderungsrate für einen linearen Zusammenhang. Die Umrechnung bzw. die Bestimmung der Temperaturinformation aus der Messung der Pulsbreite kann über einen vollen oder über einen eingeschränkten Temperatur- oder Pulsbreitenbereich erfolgen.

Optional ist die Datenverarbeitungseinheit ausgebildet, um nach der Bestimmung der Temperaturinformation diese Temperaturinformation mit mindestens einem Schwellwert zu vergleichen und nach Überschreiten des Schwellwertes mindestens einen Alarm auszulösen.

Hierbei kann die Warnfunktion etwa einer Überwachung der Temperatur in der Nähe eines Sensors beispielsweise in einem Nutzfahrzeug dienen, und einmalig oder stufenweise Warnungen bei höheren Temperaturen (z.B. bei einer Überschreitung von 180 °C in einer Achse eines Nutzfahrzeugs) ausgeben.

Ausführungsbeispiele beziehen sich auch auf ein Sensorsystem mit einem Drehzahlsensor für eine Bestimmung einer Drehzahl in einem Fahrzeug. Das Sensorsystem ist ausgebildet zu einer Übertragung von Sensorinformation aus dem Drehzahlsensor durch zeitlich begrenzte elektrische Pulse nach einem festgelegten Protokoll, und durch eine Vorrichtung zur Bestimmung einer Temperaturinformation aus dem Drehzahlsensor oder aus einer Umgebung gekennzeichnet.

Optional findet die Übertragung von Sensorinformation dabei nach einem Protokoll statt, das selbst keine Übertragung einer Temperaturinformation vorsieht. Insbesondere kann dieses Protokoll das bereits erwähnte Protokoll "Requirement Specifications for Standardized Interface for Wheel Speed Sensors with Additional Information - AK-Protocol Version: 4.0" sein. Optional eignet sich die erfindungsgemäße Ausführung auch für andere Sensorprotokolle wie das PSI5 (Peripheral Sensor Interface 5; deutsch "periphere Sensorschnittstelle 5").

Ausführungsbeispiele beziehen sich weiterhin auf ein Fahrzeug, gekennzeichnet durch mindestens ein solches Sensorsystem.

Insbesondere können solche Sensorsysteme in Nutzfahrzeugen oder Anhängern eingesetzt werden, in denen Drehzahlsensoren zur Messung von Drehzahlen von Rädern integriert sind. Die Daten eines Drehzahlsensors werden dabei z.B. an Steuereinrichtungen des Bremssystems übertragen. Dabei besteht beispielsweise Interesse an einer Überwachung der Temperatur im Lager des überwachten Rads an der Nutzfahrzeugachse oder dem Anhänger. Mit Hilfe der Vorrichtung kann durch eine Überwachung der Temperatur im Drehzahlsensor auf die Temperatur im Lager rückgeschlossen werden. Wie bereits angesprochen besitzen aktive Drehzahlsensorgeräte dabei zuweilen selbst interne Temperatursensoren, die zugehörigen Informationen sind jedoch nicht über das häufig in diesem Umfeld zur Anwendung kommende AK-Protokoll verfügbar. Durch die vorgestellte Lösung wird eine Temperaturinformation aus dem Drehzahlsensor ohne Abkehr vom Standard des Protokolls oder Einsatz zusätzlicher Hardware am Sensorgerät oder in dessen Nähe verfügbar.

Optional ist die Datenverarbeitungseinheit ausgebildet, um in der Bestimmung der Temperaturinformation eine vordefinierte systematische Korrektur einzuschließen, um die Temperatur an einer vordefinierten Position im Fahrzeug in der Nähe des Drehzahlsensors zu bestimmen.

Eine solche vordefinierte Position kann, wie vorangehend bereits erwähnt, beispielsweise im Lager einer Nutzfahrzeugachse liegen. Die Vorschrift zur Korrektur der aus der Pulsbreite bestimmten Temperaturinformation kann etwa der Datenverarbeitungseinheit einprogrammiert oder auch in Form einer weiteren Liste oder Tabelle beispielsweise in den Referenzdaten abgespeichert sein.

Ausführungsbeispiele beziehen sich auch auf ein Verfahren zur Messung einer Temperaturinformation aus einem Sensorgerät, welches zu einer Übertragung von Sensorinformation durch zeitlich begrenzte elektrische Pulse nach einem festgelegten Protokoll an einen Empfänger ausgebildet ist, wobei der Empfänger über Referenzdaten zu einem Zusammenhang zwischen einer Pulsdauer der elektrischen Pulse und Wärmeeffekten im Sensorgerät verfügt. Das Verfahren ist gekennzeichnet durch die Schritte
- Messen der Pulsdauer an mindestens einem der elektrischen Pulse;
- Bestimmen der Temperaturinformation aus zumindest der gemessenen Pulsdauer sowie den Referenzdaten.

Das Bestimmen der Temperaturinformation kann dabei wie vorangehend angesprochen auch indirekt bzw. mit Hilfe einer Korrektur erfolgen. Der Empfänger kann die Referenzdaten selbst speichern oder auch durch eine Übertragung aus einem entfernten Speicher abrufen.

Ausführungsbeispiele beziehen sich darüber hinaus auf ein Verfahren zur Erzeugung von Referenzdaten zu einem Zusammenhang zwischen einer Pulsdauer von zeitlich begrenzten elektrischen Pulse und Wärmeeffekten für ein Sensorgerät, welches zu einer Übertragung von Sensorinformation durch solche elektrischen Pulse an einen Empfänger ausgebildet ist, und welches während eines Herstellungsverfahrens, beispielsweise im Rahmen eines Umspritzens mit einem Kunststoff, erhitzt und anschließend abgekühlt wird. Das Verfahren umfasst die Schritte
- Bereitstellen eines Sensorgerätes während eines Herstellungsverfahrens;
- Bereitstellen eines Empfängers, welcher ausgebildet ist, die Sensorinformation zu empfangen und die Pulsdauer auszumessen;
- Wiederholtes Übertragen von Sensorinformation vom Sensorgerät an den Empfänger und gleichzeitig fortlaufendes Messen mindestens einer Temperatur im Sensorgerät während der Erhitzung beispielsweise im Rahmen des Umspritzens mit dem Kunststoff und der anschließenden Abkühlung;
- Ausmessen des Zusammenhangs zwischen der Pulsdauer und Wärmeeffekten im Sensorgerät anhand der übertragenen Sensorinformation und der Messung der Temperatur im Sensorgerät;
- Bestimmen der Referenzdaten aus mindestens einem Ergebnis der Ausmessung.

Da der Sensor in der Produktion mittels eines Kunststoffes umspritzt wird, besteht direkt in der Produktion die Möglichkeit, die Temperatur im Sensor mit der Impulsbreite abzugleichen. Der Inhalt der Sensorinformationen ist dabei nicht von Bedeutung. Ein direkter Vorteil des Verfahrens ergibt sich insbesondere bei für Nutzfahrzeuge bestimmten Drehzahlsensorsystemen durch die direkte Einbindungsmöglichkeit in den Herstellungsprozess; es werden keine weiteren Temperaturkammern zur Kalibrierung benötigt. Allein über den Umspritz- und Abkühlprozess entsteht so beispielsweise eine sensorcharakteristische Kennlinie.

Für die Zeit zwischen der Herstellung des Sensorgeräts und seinem Einbau etwa in ein Fahrzeug können die Referenzdaten beispielsweise in einer Datenbank oder - bei Vorhandensein eines internen Sensorspeichers - im Sensor selbst hinterlegt werden. Insbesondere im Fahrzeugbereich besitzen Drehzahlsensoren oft einen kundenspezifischen Speicherbereich, der dafür verwendet werden kann. Diskrete Messreihen können über Rechenvorgänge in der Datenverarbeitungseinheit oder in weiteren Elementen der Vorrichtung beispielsweise durch abschnittsweise lineare oder polynomiale Inter- oder Extrapolationen verbessert werden.

Eine Übertragung der Daten in die Datenverarbeitungseinheit bzw. in ein Speicherelement der Vorrichtung kann beispielsweise im Rahmen eines Funktionstests, im Fahrzeugbereich z.B. während einer Band-Ende-Prüfung, erfolgen. Speziell im Fahrzeugbereich bietet sich auch in Werkstätten eine Übertragung aus dem Sensorspeicher oder durch Zugriff auf eine zentrale Datenbank an. Auf diese Weise besteht selbst bei einem Austausch des Sensors im Fahrzeug weiterhin die Möglichkeit einer Temperatursensierung.

Optional schließt das Bestimmen der Referenzdaten mindestens einen der folgenden Schritte ein:
- Mitteln über Ergebnisse mehrfachen Ausmessens des Zusammenhangs zwischen der Pulsdauer und den Wärmeeffekten für ein Sensorgerät,
- Mitteln über Ergebnisse eines Ausmessens des Zusammenhangs zwischen der Pulsdauer und den Wärmeeffekten für mehrere Sensorgeräte,
- Bestimmen einer funktionalen Abhängigkeit für den Zusammenhang zwischen der Pulsdauer und den Wärmeeffekten durch Ausgleichsrechnung.

Diese Schritte sind insbesondere bedeutsam für die Erstellung einer lediglich sensortypspezifischen Kennlinie für Ausführungen, die in der Datenverarbeitungseinheit hinterlegt werden, um gegebenenfalls durch sensorspezifische Korrektur- oder auch Stützdaten verbessert und/oder vervollständigt zu werden.

Ausführungsbeispiele beziehen sich auch auf ein Computerprogrammprodukt mit darauf gespeichertem Softwarecode, welches bei Ausführung des Softwarecodes durch eine datenverarbeitende Maschine dazu vorgesehen ist, dass ein Verfahren zur Messung einer Temperaturinformation aus einem Sensorgerät wie vorangehend beschrieben durchgeführt wird.

Einige vorteilhafte Anwendungen und Ausführungen werden im Folgenden zusammengefasst:
Namentlich in der Automobilbranche bei Bremssystemen kommen Übertragungsprotokolle für Sensorinformation beispielsweise aus Drehzahlsensoren zum Einsatz, die eine Temperaturübertragung nicht vorsehen. Insbesondere ist dies für das AK-Protokoll der Fall. Ein Anbringen weiterer Hardware, wie etwa weiterer elektrischer Leitungen oder weiterer Temperatursensoren, ist ebenso wie eine Änderung des Protokolls aufwendig. Hier setzt der Grundgedanke an, eine effektive Verbreiterung von durch das Sensorgerät übertragenen elektrischen Pulsen auszunutzen, die durch thermische Bewegung im Sensorgerät zustande kommt. Durch Vergleich mit hinterlegten Referenzdaten zur temperaturabhängigen Pulsverbreiterung kann auf die Temperatur im Sensor oder in dessen Nähe rückgeschlossen werden.

Ein Anwendungsbereich besteht in Systemen, welche wie bereits angesprochen Daten nach dem AK-Protokoll übertragen. Allerdings sind auch Protokolle, die selbst mit einer Modulation der Pulsbreite arbeiten, von einer Anwendung des vorangehend beschriebenen Grundgedankens nicht a priori ausgeschlossen. So sieht ein Standardprotokoll der Pulsbreitenmodulation (Pulse Width Modulation PWM) eine Periodenlänge vor, welche beispielsweise jeweils durch einen Anfangspuls zur Markierung des Beginns einer Periode signalisiert wird. Auch diese Periode kann sich durch Wärmeeffekte verändern und wäre daher einer Messung der Temperatur nach dem vorangehend beschriebenen Grundgedanken zugänglich.

In einer Erweiterung des Anwendungsbereichs kann beispielsweise von der Messung der Pulsbreite systematisch auf Temperaturen in einer Nähe des Sensors geschlossen werden. Dies spielt beispielsweise bei Bremssystemen eine Rolle, in denen nicht die Temperatur des Drehzahlsensors eines gebremsten Rades, sondern diejenige in einem Achsenlager des Rades von Interesse ist. Die bauliche Anordnung des Drehzahlsensors bedingt eine Korrelation der Temperatur im Lager mit der Temperatur im Drehzahlsensor. Durch kontrolliertes Ausmessen der Pulsbreite für unterschiedliche Temperaturen im Lager können beispielsweise Korrekturwerte ermittelt werden, welche in die Referenzdaten bzw. in die Bestimmung der Temperatur eingehen.

In ähnlicher Weise kann über die Bestimmung der Temperaturen von Sensorgeräten an mehreren relativ zueinander fest angeordneten Positionen beispielsweise ein Temperaturgradient oder ein Temperaturprofil ermittelt werden.

Schließlich bieten sich Ausführungsbeispiele auch für eine redundante Temperaturbestimmung an, beispielsweise, falls der Sensor bereits eine Temperatur misst und in der Sensorinformation überträgt. Hier kann das von der Ausbildung des Sensors zur Messung und Übertragung einer Temperatur unabhängige vorliegende Verfahren etwa zu einer Überwachung der Funktionstüchtigkeit des Sensors herangezogen werden. So kann die Temperatur oder Temperaturinformationen von dem optional bereits vorhandenen Temperatursensor unter Nutzung der Pulsbreitenmodulation oder eines anderen Übertragungsprotokolls übertragen werden (z.B. zusammen mit anderen Informationen). Bei der Pulsbreitenmodulation werden die Breiten der einzelnen Pulse gezielt in vorbestimmter Weise geändert. Temperaturänderungen führen jedoch dazu, dass diese vorbestimmten Pulsbreitenänderungen dennoch temperaturabhängig sich ändern und weitere Ausführungsbeispiele nutzen dies als eine zusätzliche Temperaturerfassung. Ein Vorteil hiervon ist, dass die beiden Temperaturerfassungen effektiv an einem anderen Ort geschehen können, wenn z.B. der Temperatursensor an einem anderen Ort sich befindet als die Elektronik zur Pulsbreitenmodulation. Auch hierdurch kann ein Temperaturgradient oder ein Temperaturprofil (d.h. eine räumliche Abhängigkeit der Temperatur) ermittelt werden.

Als Beispiel für eine Implementierung der vorangehend beschriebenen Verfahren am Beispiel von Bremssystemen in Fahrzeugen kann etwa folgendes Schema dienen:
- Ein Sensor wird, vorteilhafterweise während seines Herstellungsverfahrens, erwärmt und abgekühlt; dabei werden die spezifischen Sensorparameter für die Abhängigkeit der Übertragungspulsbreite von der Temperatur aufgenommen;
- Aus den aufgenommenen Daten werden Korrekturparameter, beispielsweise bei Vorliegen einer sensortypspezifischen Kennlinie, errechnet, die im Sensordatenspeicher und/oder in einer Datenbank abgelegt werden;
- Erfolgt der Einbau des Sensors, werden die Korrekturparameter durch Auslesen entweder aus dem Sensorspeicher oder aus der Datenbank abgerufen und in einer mit dem Sensor verbundenen Steuereinheit gespeichert. Alternativ können bei weniger genauen Messanforderungen lediglich eine Kennlinie oder Standardparameter in der Steuereinrichtung verwendet werden;
- Die Steuereinheit ist zur Messung der Pulsbreite ausgebildet und kann somit auf die Temperatur am Sensor oder im Lager rückschließen. Dabei kann sie insbesondere lediglich aufgrund von Standardzusammenhängen bestimmte Temperaturen mit Hilfe der abgespeicherten Korrekturparameter korrigieren;
- Die Steuereinheit kann zudem Warnungen für Temperaturen oberhalb vordefinierter Schwellen, insbesondere für das Lager, ausgeben.

Die Implementierung einer reinen Warnschwelle kann beispielsweise für ein Nutzfahrzeug, bei dem eine Drehzahlsensor die Drehzahl eines Rades misst und in dem eine Temperatur am Sensor oder an der dem Sensor nahegelegenen Radachse überwacht werden soll, folgenden Schritten folgen:
- Das Nutzfahrzeug wird beispielsweise über Nacht abgestellt, so dass sich die Temperatur im Sensor, an der Achse bzw. im Bremssystem ausgleicht;
- Durch Übertragung einer Information aus dem Sensor kann die Vorrichtung, etwa durch Messung der Pulsbreite und Abgleich mit einer äußeren Temperaturinformation, einen Referenzpunkt für die Korrelation der Pulsbreite mit der Temperatur feststellen;
- Mit Hilfe einer der Datenverarbeitungseinheit als Referenzdatum zur Verfügung stehenden Steigungswerts für einen linearen Zusammenhang zwischen Pulsbreite und Temperatur kann die Pulsbreite im anschließenden Betrieb mit einer Temperatur korreliert werden. Bei einer Temperatur von beispielsweise 180 °C (z.B. bei einer Pulsdauer von 55µs entsprechend) kann dann eine Warnung ausgegeben werden.

Die Ausführungsbeispiele der vorliegenden Erfindung werden besser verstanden von der folgenden detaillierten Beschreibung und den beiliegenden Zeichnungen der unterschiedlichen Ausführungsbeispiele, die jedoch nicht so verstanden werden sollten, dass sie die Offenbarung auf die spezifischen Ausführungsformen einschränken, sondern lediglich der Erklärung und dem Verständnis dienen.
- Fig. 1: zeigt ein Schema für ein Ausführungsbeispiel der vorliegenden Erfindung.
- Fig. 2: zeigt eine typische Pulsfolge nach dem AK-Protokoll.
- Fig. 3: zeigt Ergebnisse einer Messreihe zur Abhängigkeit einer Pulsbreite von einer Temperatur im Sensorgerät.
- Fig. 4: zeigt eine Situation eines Drehzahlsensors in einem Fahrzeug.
- Fig. 5: zeigt Schritte eines Verfahren zur Messung einer Temperaturinformation aus einem Sensor über Pulsverbreiterung.
- Fig. 6: zeigt Schritte eines Verfahrens zur Erzeugung von Referenzdaten.

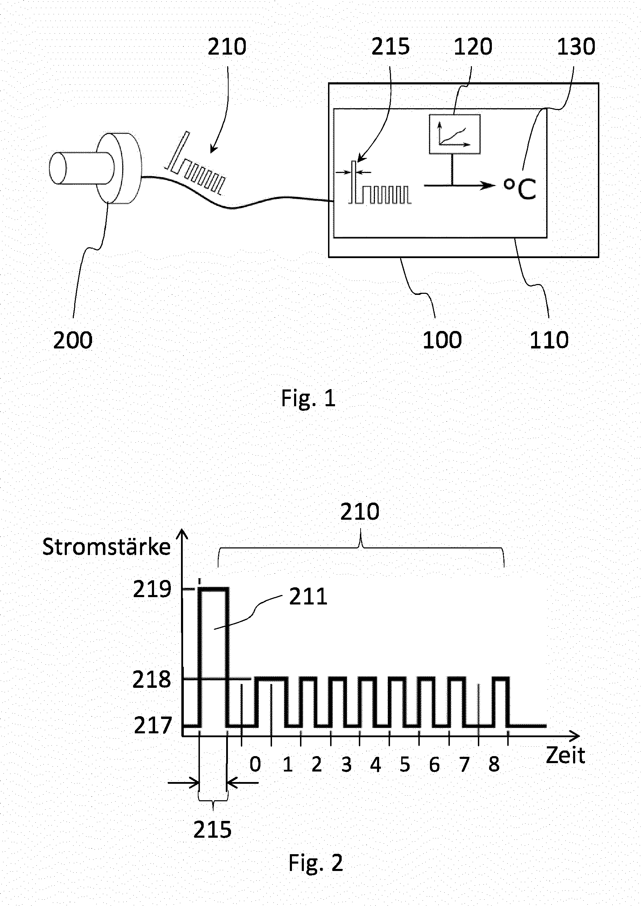

**Fig. 1** zeigt schematisch eine Vorrichtung 100 für eine Bestimmung einer Temperaturinformation 130 aus einem Sensorgerät 200. Das Sensorgerät 200 ist elektrisch verbunden mit der Vorrichtung 100 zur Übertragung von Sensorinformation durch zeitlich begrenzte elektrische Pulse 210 nach einem festgelegten Protokoll. Die Vorrichtung 100 umfasst eine Datenverarbeitungseinheit 110, die Zugriff auf Referenzdaten 120 zur Abhängigkeit einer Pulsdauer 215 von einer Temperatur im Sensorgerät 200 besitzt. Im dargestellten Schema sind die Referenzdaten in einem Speicher der Datenverarbeitungseinheit selbst abgelegt, sie können aber beispielsweise auch an anderer Stelle in der Vorrichtung abgespeichert sein. Die Datenverarbeitungseinheit 110 misst die Pulsdauer 215 an mindestens einem der elektrischen Pulse 210. Sie ruft die Referenzdaten 120 ab, um die Temperaturinformation 130 basierend auf dem Ergebnis der Messung sowie den Referenzdaten 120 zu bestimmen.

**Fig. 2** zeigt eine typische Folge elektrischer Pulse 210 nach dem AK-Protokoll, das insbesondere zur Übertragung von Sensorinformation aus Drehzahlsensoren 200 (hier nicht im Bild) für Räder in Fahrzeugen verwendet wird. Ein Drehzahlsensor 200 misst eine Drehzahl eines Rades typischerweise an einem Polrad 330 (hier nicht dargestellt), etwa anhand von Durchgängen von Speichen oder Zähnen. Die Durchgänge bewirken dabei Geschwindigkeitspulse 211 in einer Rate proportional zur Drehzahl des Rads.

Bei den vom Drehzahlsensor 200 übertragenen Pulsen 210 handelt es sich um Strompulse. Die Übertragung erfolgt oberhalb einer Grundstromstärke 217 mit zwei Stromstärken. Eine hohe Stromstärke 219 - z.B. 28 mA - zeigt am Anfang einer Pulsfolge bzw. eines Datenpakets einen Geschwindigkeitspuls 211 an. Auf den Geschwindigkeitspuls 211 folgen mit einer niedrigeren Stromstärke 218 (dem output current oder Ausgangsstrom) neun Bits an Information bei einer Nummerierung der Bitzellenzahl (bit cell number) von 0 bis 8. Die elektrischen Pulse 210 übertragen die Bits dabei typischerweise in einer Manchester-Codierung. Die Bitzellen sind zeitlich begrenzt durch eine Dauer (in der Literatur oft mit tₚ bezeichnet), die typischerweise durch die Dauer bzw. Breite des Geschwindigkeitspulses 211 bestimmt ist. Innerhalb der Bitzellen sind Bits codiert durch eine Veränderung der Stromstärke: Eine logische 1 wird beispielsweise durch eine steigende, eine logische 0 durch eine fallende Stromstärke angegeben. Der Informationsgehalt des Protokolls umfasst typischerweise keine Temperaturinformation aus dem Drehzahlsensor 200 oder seiner Umgebung.

Die Dauer des Geschwindigkeitspulses 211 bzw. der Bitzellen kann hier als Pulsdauer 215 verwendet und in der Datenverarbeitungseinheit 110 (hier nicht dargestellt) gemessen werden. Sie liegt in einem Bereich von 50 µs ± 10 µs, abhängig von der Temperatur im Drehzahlsensor 200. Drehzahlsensoren 200 arbeiten in Fahrzeugen normalerweise in Umgebungen, welche Temperaturen zwischen etwa -40 °C und etwa 200 °C zeigen. Bei voller Ausnutzung des Temperaturbereichs lässt sich somit beispielsweise eine Auflösung von etwa 12 °C pro Mikrosekunde erzielen.

Zu einer vorteilhaften Nutzung der hier vorgestellten Temperatursensierung stellen Abwandlungen der Codierung oder andere Protokolle kein Hindernis dar. Zur Bestimmung einer Temperaturinformation 130 muss lediglich eine Pulsdauer 215 messbar sein.

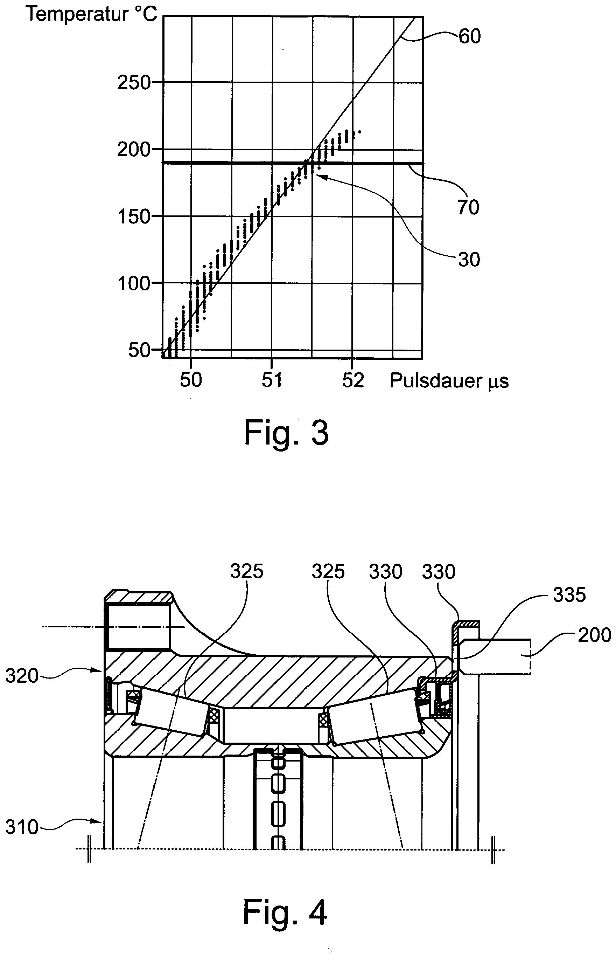

**Fig. 3** zeigt ein Beispiel für Messergebnisse 30 zur Abhängigkeit einer Pulsdauer 215 des AK-Protokolls von der Temperatur für einen Drehzahlsensor 200 (hier jeweils nicht dargestellt), wie er im Fahrzeugbereich Verwendung findet. Dargestellt sind neben den Messergebnissen 30 eine aus diesen berechnete Linearisierungsgerade 60 sowie eine Temperatur-Warnschwelle 70.

Die Linearisierungsgerade 60 ist durch Ausgleichsrechnung aus den Messergebnissen 30 ermittelt worden und kann beispielsweise als Kennlinie für den Drehzahlsensor 200 oder auch einen anderen Drehzahlsensor desselben Bautyps dienen. Die Linearisierungsgerade 60 kann insbesondere auch durch eine genauer angepasste Kurve, etwa eine Polynom, ersetzt werden.

Steigt die bestimmte Temperatur 130 im Betrieb des Drehzahlsensors 200 über die Warnschwelle 70, kann die Datenverarbeitungseinheit 110 bzw. die Vorrichtung 100 zur Temperaturbestimmung dies beispielsweise an ein übergeordnetes System melden, beziehungsweise z.B. einen Alarm oder eine Warnung ausgeben.

**Fig. 4** zeigt eine Situation eines Drehzahlsensors 200 an einem Rad für ein Bremssystem in einem Fahrzeug. Zu sehen ist ein Querschnitt durch einen Teil der Radachse 310 sowie des Radträgers bzw. der Radlagereinheit 320 in einer die Raddrehachse umfassenden Ebene. Auf der rechten Seite ist das Sensorgerät in Form eines Drehzahlsensors 200 abgebildet, der über die Durchgänge von Öffnungen 335 eines beispielsweise aus einem Blech gestanzten Polrads 330 eine Drehzahl des Rades bestimmt und an eine hier nicht dargestellte elektronische Steuereinheit 100 etwa des Antiblockiersystems weitergibt. Das Lager 325 ist hier beispielhaft als zweireihiges Kegelrollen- oder auch Schrägkugellager ausgebildet.

Zur Überwachung einer Temperatur im Lager 325 kann eine hier nicht dargestellte Datenverarbeitungseinheit 110 in der elektronischen Steuereinheit 100 die Temperatur im lagernahen Drehzahlsensor 200 bestimmen. Ferner kann die Datenverarbeitungseinheit 110 weiter ausgebildet sein, um durch vordefinierte Korrektur dieser Temperatur auf eine Temperatur im Lager rückzuschließen. Eine Temperaturmessung beispielsweise durch Messung und codierte Übertragung im Drehzahlsensor 200 selbst oder durch einen weiteren Sensor wäre hingegen aufgrund der dazu notwendigen Änderung des Übertragungsprotokolls oder des Einsatzes weiterer Hardware angesichts der Komplexität des Radmoduls aufwendig und kostenintensiv.

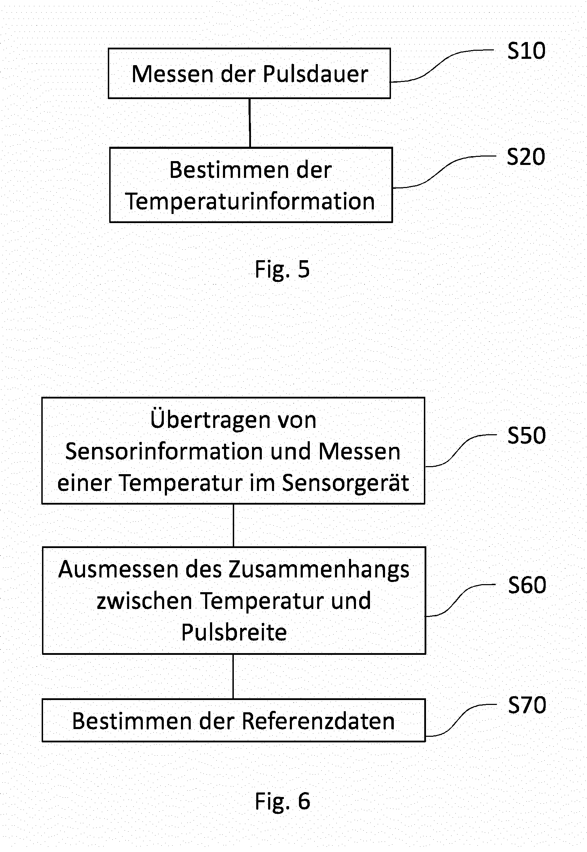

**Fig. 5** zeigt Schritte eines Verfahrens zur Messung einer Temperaturinformation 130 aus einem Sensorgerät 200, welches zu einer Übertragung von Sensorinformation durch zeitlich begrenzte elektrische Pulse 210 nach einem festgelegten Protokoll an einen Empfänger ausgebildet ist, wobei der Empfänger über Referenzdaten 120 zu einem Zusammenhang zwischen einer Pulsdauer 215 der elektrischen Pulse und Wärmeeffekten im Sensorgerät 200 verfügt. Ein erster kennzeichnender Schritt des Verfahrens besteht im Messen S10 der Pulsdauer 215 an mindestens einem der elektrischen Pulse 210. Diese Messung S10 erfolgt vorteilhafterweise im Empfänger. Der zweite kennzeichnende Schritt des Verfahrens besteht in einem Bestimmen S20 der Temperaturinformation 130 aus zumindest der gemessenen Pulsdauer 215 sowie den Referenzdaten 120. Die Bestimmung kann dabei weitere Korrekturen umfassen.

**Fig. 6** zeigt Schritte eines Verfahrens zur Erzeugung von Referenzdaten für ein Sensorgerät 200, das zu einer Übertragung von Sensorinformation durch zeitlich begrenzte elektrische Pulse 210 eines elektrischen Stroms an einen Empfänger ausgebildet ist, und welches während eines Herstellungsverfahrens durch einen Kunststoff umspritzt, dabei erhitzt und anschließend abgekühlt wird, zu einem Zusammenhang zwischen einer Pulsdauer 215 der elektrischen Pulse 210 und Wärmeeffekten im Sensorgerät 200. Das Sensorgerät 200 wird während des Herstellungsverfahrens mit einem bereitgestellten Empfänger in Verbindung gebracht, welcher ausgebildet ist, die Sensorinformation zu empfangen und die Pulsdauer 215 auszumessen. Kennzeichnende Schritte umfassen dann zunächst ein wiederholtes Übertragen S50 von Sensorinformation vom Sensorgerät 200 an den Empfänger bei gleichzeitig fortlaufendem Messen mindestens einer Temperatur im Sensorgerät 200 während der Erhitzung im Rahmen des Umspritzens mit dem Kunststoff und der anschließenden Abkühlung. Mit den gewonnenen Daten erfolgt als nächster Schritt ein Ausmessen S60 bzw. Bestimmen des Zusammenhangs zwischen der Pulsdauer 215 und Wärmeeffekten im Sensorgerät 200 anhand der Übertragung S50 der Sensorinformation und der Messung der Temperatur im Sensorgerät 200. Schließlich erfolgt ein Bestimmen S70 der Referenzdaten 120 aus mindestens einem Ergebnis der Ausmessung S60.

Beim Übertragen S50 von Sensorinformation und Messen einer Temperatur im Sensorgerät 200 ist der Inhalt der Information zumindest nicht notwendigerweise von Bedeutung. Bei den Referenzdaten 120 kann es sich um Basisdaten etwa für eine Kennlinie des Zusammenhangs zwischen Pulsbreite 215 und Temperatur für den Sensortyp und/oder um sensorspezifische Daten handeln.

### BEZUGSZEICHENLISTE

- 30: Messergebnisse
- 60: berechnete Linearisierungsgerade
- 70: Warnschwelle
- 100: Vorrichtung zur Bestimmung einer Temperaturinformation
- 110: Datenverarbeitungseinheit
- 120: Referenzdaten
- 123: Kennlinie
- 127: Korrekturdaten
- 130: Temperaturinformation
- 200: Sensorgerät
- 210: elektrische Pulse
- 211: Geschwindigkeitspuls
- 215: Pulsdauer
- 217: Grundstrom
- 218: Niedriger Strom
- 219: Hoher Strom
- 310: Radachse
- 320: Radlagereinheit
- 325: Radlager
- 330: Polrad
- 335: Polradöffnung
- S10: Messen der Pulsdauer
- S20: Bestimmen der Temperaturinformation
- S50: Übertragen von Sensorinformation und Messen einer Temperatur im Sensorgerät
- S60: Ausmessen des Zusammenhangs zwischen Temperatur und Pulsbreite
- S70: Bestimmen der Referenzdaten

## Patentansprüche

1. Vorrichtung (100) für eine Bestimmung einer Temperaturinformation (130) aus einem Sensorgerät (200), welches einen Drehzahlsensor umfasst und zu einer Übertragung von Sensorinformation durch zeitlich begrenzte elektrische Pulse (210) nach einem festgelegten Protokoll ausgebildet ist,
**gekennzeichnet durch**
eine Datenverarbeitungseinheit (110), die ausgebildet ist, um:
- Referenzdaten (120) zu einem Zusammenhang zwischen einer Pulsdauer (215) der elektrischen Pulse (210) und Wärmeeffekten im Sensorgerät (200) abzurufen;
- die Pulsdauer (215) an mindestens einem der elektrischen Pulse (210) zu messen; und
- die Temperaturinformation (130) basierend auf zumindest einem Ergebnis der Messung sowie den Referenzdaten (120) zu bestimmen.

2. Die Vorrichtung (100) nach Anspruch 1,
**dadurch gekennzeichnet, dass**
die Datenverarbeitungseinheit (110) ausgebildet ist, um die Temperaturinformation (130) basierend auf Referenzdaten (120) zu bestimmen, welche zumindest eines der folgenden Merkmale aufweisen:
- die Referenzdaten (120) spezifizieren für mindestens eine Pulsdauer (215) der elektrischen Pulse (210) eine der Pulsdauer (215) zugeordnete Temperatur,
- die Referenzdaten (120) spezifizieren einen linearen Zusammenhang zwischen einer Temperatur und der Pulsdauer (215) der elektrischen Pulse (210),
- die Referenzdaten (120) spezifizieren einen quantisierten oder nicht-linearen Zusammenhang zwischen einer Temperatur und der Pulsdauer (215) der elektrischen Pulse (210),
- die Referenzdaten (120) spezifizieren sensorabhängige Korrekturdaten, welche für das Sensorgerät (200) Abweichungen von einem vordefinierten Zusammenhang zwischen einer Temperatur und der Pulsdauer (215) der elektrischen Pulse (210) festlegen.

3. Die Vorrichtung (100) nach einem der vorhergehenden Ansprüche,
**dadurch gekennzeichnet, dass**
die Datenverarbeitungseinheit (110) ausgebildet ist, um nach der Bestimmung der Temperaturinformation (130) diese Temperaturinformation (130) mit mindestens einem Schwellwert (70) zu vergleichen und nach Überschreiten des Schwellwertes (70) mindestens einen Alarm auszulösen.

4. Ein Sensorsystem mit einem Drehzahlsensor (200) für eine Bestimmung einer Drehzahl in einem Fahrzeug, welches ausgebildet ist zu einer Übertragung von Sensorinformation aus dem Drehzahlsensor (200) durch zeitlich begrenzte elektrische Pulse (210) nach einem festgelegten Protokoll,
**gekennzeichnet durch**
eine Vorrichtung (100) nach einem der Ansprüche 1 bis 3, um eine Temperaturinformation (130) aus dem Drehzahlsensor (200) oder aus einer Umgebung davon zu bestimmen.

5. Ein Sensorsystem nach Anspruch 4,
**dadurch gekennzeichnet, dass**
die Übertragung von Sensorinformation nach einem Protokoll, welches keine Übertragung einer Temperaturinformation vorsieht, oder insbesondere nach dem Protokoll "Requirement Specifications for Standardized Interface for Wheel Speed Sensors with Additional Information - AK-Protocol Version: 4.0" stattfindet.

6. Ein Fahrzeug,
**gekennzeichnet durch**
mindestens ein Sensorsystem nach Anspruch 4 oder Anspruch 5.

7. Das Fahrzeug nach Anspruch 6,
**dadurch gekennzeichnet, dass**
die Datenverarbeitungseinheit (110) ausgebildet ist, um in der Bestimmung der Temperaturinformation (130) eine vordefinierte systematische Korrektur einzuschließen, um die Temperatur an einer vordefinierten Position im Fahrzeug in der Nähe des Drehzahlsensors (200) zu bestimmen.

8. Verfahren zur Messung einer Temperaturinformation (130) aus einem Sensorgerät (200), welches einen Drehzahlsensor umfasst und zu einer Übertragung von Sensorinformation durch zeitlich begrenzte elektrische Pulse (210) nach einem festgelegten Protokoll an einen Empfänger ausgebildet ist, wobei der Empfänger über Referenzdaten (120) zu einem Zusammenhang zwischen einer Pulsdauer (215) der elektrischen Pulse (210) und Wärmeeffekten im Sensorgerät (200) verfügt,
**gekennzeichnet durch:**
- Messen (S10) der Pulsdauer (215) an mindestens einem der elektrischen Pulse(210);
- Bestimmen der Temperaturinformation (130) aus zumindest der gemessenen Pulsdauer (215) sowie den Referenzdaten (120).

9. Verfahren zur Erzeugung von Referenzdaten (120) zu einem Zusammenhang zwischen einer Pulsdauer (215) von zeitlich begrenzten elektrischen Pulsen (210) und Wärmeeffekten für ein Sensorgerät (200), welches einen Drehzahlsensor umfasst und zu einer Übertragung von Sensorinformation durch solche elektrischen Pulse (210) an einen Empfänger ausgebildet ist, und welches während eines Herstellungsverfahrens erhitzt und anschließend abgekühlt wird,
**gekennzeichnet durch:**
- Übertragen (S50) von Sensorinformation vom Sensorgerät (200) an den Empfänger und gleichzeitig fortlaufendes Messen mindestens einer Temperatur im Sensorgerät (200) während der Erhitzung und der anschließenden Abkühlung;
- Ausmessen (S60) des Zusammenhangs zwischen der Pulsdauer (215) und Wärmeeffekten im Sensorgerät (200) anhand der Übertragung (S50) von Sensorinformation und der Messung der Temperatur im Sensorgerät (200);
- Bestimmen der Referenzdaten (120) aus mindestens einem Ergebnis des Ausmessens (S60).

10. Das Verfahren nach Anspruch 9,
**dadurch gekennzeichnet, dass**
das Bestimmen der Referenzdaten (120) mindestens einen der folgenden Schritte einschließt:
- Mitteln über Ergebnisse mehrfachen Ausmessens (S60) des Zusammenhangs zwischen der Pulsdauer (215) und den Wärmeeffekten für ein Sensorgerät (200),
- Mitteln über Ergebnisse eines Ausmessens (S60) des Zusammenhangs zwischen der Pulsdauer (215) und den Wärmeeffekten für mehrere Sensorgeräte (200),
- Bestimmen einer funktionalen Abhängigkeit für den Zusammenhang zwischen der Pulsdauer (215) und den Wärmeeffekten durch Ausgleichsrechnung.

11. Ein Computerprogrammprodukt mit darauf gespeichertem Softwarecode, welches bei Ausführung des Softwarecodes durch eine datenverarbeitende Maschine dazu vorgesehen ist, dass ein Verfahren nach Anspruch 8 durchgeführt wird.

## Claims

1. A device (100) for determining temperature information (130) from a sensor device (200) that comprises a speed sensor and is configured to transmit sensor information by means of time-limited electrical pulses (210) according to a defined protocol,
**characterised by**
a data processing unit (110) that is configured:
- to retrieve reference data (120) relating to a relationship between a pulse duration (215) of the electrical pulses (210) and thermal effects in the sensor device (200);
- to measure the pulse duration (215) at at least one of the electrical pulses (210); and
- to determine the temperature information (130) on the basis of at least one result of the measurement, and the reference data (120).

2. A device (100) according to claim 1,
**characterised in that**
the data processing unit (110) is configured to determine the temperature information (130) on the basis of reference data (120) that have at least one of the following characteristics:
- for at least one pulse duration (215) of the electrical pulses (210), the reference data (120) specify a temperature assigned to that pulse duration (215);
- the reference data (120) specify a linear relationship between a temperature and the pulse duration (215) of the electrical pulses (210);
- the reference data (120) specify a quantised or non-linear relationship between a temperature and the pulse duration (215) of the electrical pulses (210);
- the reference data (120) specify sensor-dependent correction data that define deviations from a predefined relationship between a temperature and the pulse duration (215) of the electrical pulses (210) for the sensor device (200).

3. A device (100) according to any one of the preceding claims,
**characterised in that**
the data processing unit (110) is configured, having first determined the temperature information (130), to compare this temperature information (130) with at least one threshold value (70) and to trigger at least one alarm once the threshold value (70) has been exceeded.

4. A sensor system having a speed sensor (200) for determining a speed in a vehicle, this sensor system being configured to transmit sensor information from the speed sensor (200) by means of time-limited electrical pulses (210) according to a defined protocol,
**characterised by**
a device (100) according to any one of claims 1 to 3, for determining temperature information (130) from the speed sensor (200) or the environment of the speed sensor (200).

5. A sensor system according to claim 4,
**characterised in that**
sensor information is transmitted according to a protocol that makes no provision for the transmission of temperature information or, in particular, according to the "Requirement Specifications for Standardized Interface for Wheel Speed Sensors with Additional Information -AK-Protocol Version: 4.0" protocol.

6. A vehicle,
**characterised by**
at least one sensor system according to claim 4 or claim 5.

7. A vehicle according to claim 6,
**characterised in that**
the data processing unit (110) is configured to include a predefined systematic correction in the determination of the temperature information (130) in order to determine the temperature at a predefined position in the vehicle in the vicinity of the speed sensor (200).

8. A method for measuring temperature information (130) from a sensor device (200) that comprises a speed sensor and is configured to transmit sensor information to a receiver by means of time-limited electrical pulses (210) according to a defined protocol, the receiver having available reference data (120) relating to a relationship between a pulse duration (215) of the electrical pulses (210) and thermal effects in the sensor device (200),
**characterised by:**
- the measurement (S10) of the pulse duration (215) at at least one of the electrical pulses (210);
- the determination of the temperature information (130) from at least the measured pulse duration (215) and the reference data (120).

9. A method for generating reference data (120) relating to a relationship between a pulse duration (215) of time-limited electrical pulses (210) and thermal effects for a sensor device (200) that comprises a speed sensor, is configured to transmit sensor information to a receiver by means of such electrical pulses (210) and is heated and subsequently cooled during a production process,
**characterised by:**
- the transmission (S50) sensor information from the sensor device (200) to the receiver and, simultaneously, the continuous measurement of at least one temperature in the sensor device (200) during the heating and subsequent cooling;
- the evaluation (S60) of the relationship between the pulse duration (215) and thermal effects in the sensor device (200) on the basis of the transmission (S50) of sensor information and the measurement of the temperature in the sensor device (200);
- the determination of the reference data (120) from at least one result of the evaluation process (S60).

10. A method according to claim 9,
**characterised in that**
the determination of the reference data (120) includes at least one of the following steps:
- the averaging of the results of repeated evaluations (S60) of the relationship between the pulse duration (215) and the thermal effects for a sensor device (200);
- the averaging of the results of an evaluation (S60) of the relationship between the pulse duration (215) and the thermal effects for a plurality of sensor devices (200);
- the determination of a functional dependence for the relationship between the pulse duration (215) and the thermal effects by means of curve fitting.

11. A computer program product on which software code is stored and that is provided to implement a method according to claim 8 when the software code is executed by a data-processing machine.

## Revendications

1. Dispositif (100) de détermination d'une information (130) de température à partir d'un appareil (200) capteur, qui comprend un capteur de vitesse de rotation et qui est constitué pour une transmission de l'information de capteur par des impulsions (210) électriques limitées dans le temps suivant un programme fixé,
**caractérisé par**
une unité (110) de traitement de données, qui est constituée pour :
- appeler des données (120) de référence à une relation entre une durée (215) des impulsions (210) électriques et des effets calorifiques dans l'appareil (200) capteur ;
- mesurer la durée (215) d'impulsion sur au moins l'une des impulsions (210) électriques ; et
- déterminer l'information (130) de température sur la base d'au moins un résultat de la mesure ainsi que des données (120) de référence.

2. Dispositif (100) suivant la revendication 1,
**caractérisé en ce que**
l'unité (110) de traitement de données est constituée pour déterminer l'information (130) de température sur la base des données (120) de référence, qui comportent au moins l'une des caractéristiques suivantes :
- les données (120) de référence précisent, pour au moins une durée (215) d'impulsion des impulsions (210) électriques, une température associée à la durée (215) d'impulsion,
- les données (120) de référence précisent une relation linéaire entre une température et la durée (215) d'impulsion des impulsions (210) électriques,
- les données (120) de référence précisent une relation quantifiée ou non linéaire entre une température et la durée (215) d'impulsion des impulsions (210) électriques,
- les données (120) de référence précisent des données de correction, en fonction d'un capteur, qui fixent, pour l'appareil (200) capteur, des écarts à une relation définie à l'avance entre une température et la durée (215) d'impulsion des impulsions (210) électriques.

3. Dispositif (100) suivant l'une des revendications précédentes,
**caractérisé en ce que**
l'unité (110) de traitement de données est constituée pour comparer, après la détermination de l'information (130) de température, cette information (130) de température à au moins une valeur (70) de seuil et pour déclencher au moins une alerte, après dépassement de la valeur (70) de seuil.

4. Système capteur comprenant un capteur (200) de vitesse de rotation pour une détermination d'une vitesse de rotation d'un véhicule, qui est constitué pour une transmission d'une information de capteur, à partir du capteur (200) de vitesse de rotation, par des impulsions (210) électriques limitées dans le temps suivant un programme fixé,
**caractérisé par**
un dispositif (100) suivant l'une des revendications 1 à 3 pour déterminer une information (130) de température à partir du capteur (200) de vitesse de rotation ou d'un environnement de celui-ci.

5. Système capteur suivant la revendication 4,
**caractérisé en ce que**
la transmission d'information de capteur a lieu selon un programme, qui ne prévoit pas de transmission d'une information de température, ou qui a lieu en particulier selon le programme
« requirement spécifications for standardized interface for wheel speed sensors with additional information - AK-protocol version : 4,0 ».

6. Véhicule,
**caractérisé par**
au moins un système capteur suivant la revendication 4 ou la revendication 5.

7. Véhicule suivant la revendication 6,
**caractérisé en ce que**
l'unité (110) de traitement de données est constituée pour inclure, dans la détermination de l'information (130) de température, une correction systématique définie à l'avance, afin de déterminer la température en une position définie à l'avance du véhicule à proximité du capteur (200) de vitesse de rotation.

8. Procédé de mesure d'une information (130) de température à partir d'un appareil (200) capteur, qui comprend un capteur de vitesse de rotation et qui est constitué pour une transmission d'information de capteur par des impulsions (210) électriques limitées dans le temps suivant un programme fixé à un récepteur, dans lequel le récepteur dispose de données (120) de référence à une relation entre une durée (215) d'impulsion des impulsions (210) électriques et des effets calorifiques dans l'appareil (200) capteur,
**caractérisé par** :
- mesure (S10) de la durée (215) d'impulsion sur au moins l'une des impulsions (210) électriques ;
- détermination de l'information (130) de température à partir d'au moins la durée (215) d'impulsion mesurée, ainsi que des données (120) de référence.

9. Procédé de production de données (120) de référence à une relation entre une durée (215) d'impulsion d'impulsions (210) électriques limitées dans le temps et des effets calorifiques pour un appareil (200) capteur, qui comprend un capteur de vitesse de rotation et qui est constitué pour une transmission d'information de capteur par de telles impulsions (210) électriques à un récepteur, et que l'on chauffe pendant un procédé de fabrication et que l'on refroidit ensuite,
**caractérisé par** :
- transmission (S50) d'une information de capteur de l'appareil (200) de capteur au récepteur et mesure en continue en même temps d'au moins une température dans l'appareil (200) capteur pendant le chauffage et le refroidissement ensuite ;
- mesure (S60) de la relation entre la durée (215) d'impulsion et les effets calorifiques dans l'appareil (200) capteur à l'aide de la transmission (S50) d'une information de capteur et de la mesure de la température de l'appareil (200) capteur ;
- détermination des données (120) de référence à partir d'au moins un résultat de la mesure (S60).

10. Procédé suivant la revendication 9,
**caractérisé en ce que**
la détermination des données (120) de référence comprend au moins l'un des stades suivants :
- on effectue la moyenne de résultats de plusieurs mesures (S60) de la relation entre la durée (215) d'impulsion et les effets calorifiques pour un appareil (200) capteur,
- on effectue la moyenne de résultats d'une mesure (S60) de la relation entre la durée (215) d'impulsion et les effets calorifiques pour plusieurs appareils (200) capteurs,
- on détermine une dépendance fonctionnelle pour la relation entre la durée (215) d'impulsion et les effets calorifiques par un calcul de comparaison.

11. Produit de programme d'ordinateur, sur lequel est mis en mémoire un code logiciel, qui est prévu pour, lors de la réalisation du code logiciel par une machine de traitement de données, effectuer un procédé suivant la revendication 8.
